# EUROPEAN PATENT APPLICATION

(11) **EP 2 444 887 A2**
(43) Date of publication of application: **25.04.2012**
(21) Application number: 11186582.0
(22) Date of filing: 25.10.2011
(51) Int. Cl.: G06F 3/048, G06F 15/02

(54) **Method and apparatus for turning pages in e-book reader**

(30) Priority: 25.10.2010 KR 20100103837
(71) Applicant: Samsung Electronics Co., Ltd., Suwon-si, Gyeonggi-do (KR)
(72) Inventor: Kim, Cheon-Shik, Seoul (KR); Kwon, Ki-Hwan, Seoul (KR); Song, Sang-Hoon, Gyeonggi-do (KR); Lee, Jun-Haeng, Seoul (KR); Lee, Dong-Eun, Seoul (KR)
(74) Representative: Jenkins, Richard Gavin

(57) **Abstract**

A method turns pages in an electronic book (e-book) reader. The method includes displaying an e-book as left/right pages and, if a page turn signal is generated, turning a left page or a right page while displaying an action of turning a left page to the right or a right page to the left as if turning pages of a paper book.

## Description

### TECHNICAL FIELD OF THE INVENTION

The present invention relates to an electronic book (e-book) reader. More particularly, although not exclusively, the present invention relates to a method for turning pages as if treating a paper book in an e-book reader.

### BACKGROUND OF THE INVENTION

E-books are generically known as digital books for, after the contents of publications published or publishable as books are recorded in an electronic recording medium or storage device using digital data, enabling users to read, see, and listen to the contents with computers or portable terminals through a wired/wireless information communication network.

Compared to paper books, the e-books are inexpensive and can save time through on-line purchase, and users can separately purchase only a necessary portion. Recently, these e-books can allow users to read while watching a moving picture or listening to background music, and can be stored in a Personal Digital Assistant (PDA) or portable terminal to easily find and see a desired book anytime, anywhere. In recent years, e-book industries have developed rapidly. For example, e-books have an improved screen resolution, various edit functions and the like, thus being capable of turning pages even with only a click. E-book industries have made possible text zooming in and out, document search, and contents download of an Internet bookstore or library and the like in addition to making a note.

However, the users familiar with the paper books can draw unwelcome attention in treating the e-books. For example, the e-books are generally providing a page turning method different from that of the paper book, and this can give the users a sense of difference.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

To address the above-discussed deficiencies of the prior art, it is a primary aspect of certain embodiments of the present invention to solve at least the above-mentioned problems and/or disadvantages and to provide at least the advantages described below. Accordingly, an aim of certain embodiments of the present invention is to provide a method for turning pages in an electronic book (e-book) reader to solve a sense of difference between a paper book and an e-book.

Certain embodiments of the present invention aim to provide a method for turning pages in an e-book reader such that looking over is easy.

The above aims are achieved by certain embodiments by providing a method and an apparatus for turning pages in an e-book reader.

In accordance with one aspect of the present invention, a method for turning pages in an electronic book (e-book) reader is provided. The method includes displaying an e-book as left/right pages and, if a page turn signal is generated, turning a left page or a right page while displaying an action of turning a left page to the right or a right page to the left as if turning pages of a paper book.

In accordance with another aspect of the present invention, apparatus for turning pages in an electronic book (e-book) reader is provided. The apparatus includes an output unit for displaying an e-book as left/right pages, and a control unit, if a page turn signal is generated, for turning a left page or a right page while displaying an action of turning a left page to the right or a right page to the left as if turning pages of a paper book. Another aspect of the invention provides a computer program comprising instructions arranged, when executed, to implement a method and/or apparatus in accordance with any one of the above-described aspects. A further aspect provides machine-readable storage storing such a program.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of aspects and embodiments of the present invention and their advantages, reference is now made to the following description taken in conjunction with the accompanying drawings, in which like reference numerals represent like parts:
FIG. 1 illustrates a perspective diagram for an electronic book (e-book) reader according to an embodiment of the present invention;
FIG. 2 illustrates a block diagram for a construction of an e-book reader according to an embodiment of the present invention;
FIG. 3 illustrates a diagram for a method for turning pages in an e-book reader with a touch screen according to an embodiment of the present invention;
FIG. 4 illustrates a diagram for a method for turning pages in an e-book reader with a touch screen according to an embodiment of the present invention;
FIG. 5 illustrates a diagram for a method for turning pages in an e-book reader with a touch screen according to an embodiment of the present invention;
FIGS. 6A to 6C illustrate diagrams for a turning pages in an e-book reader with a Liquid Crystal Display (LCD) according to an embodiment of the present invention; and
FIG. 7 illustrates a flowchart for a procedure of turning pages in an e-book reader with a touch screen according to an embodiment of the present invention.

### DETAILED DESCRIPTION OF THE INVENTION

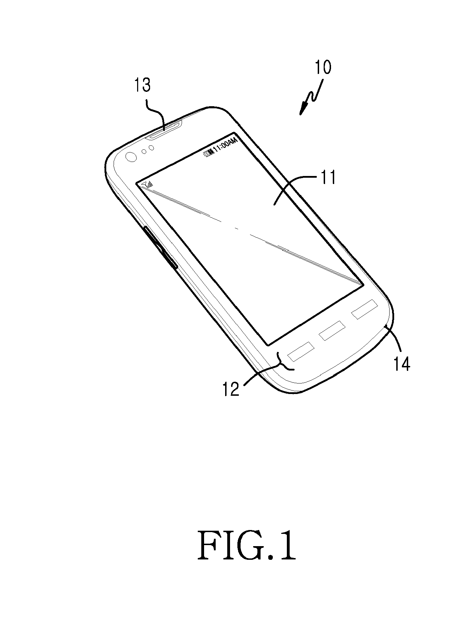

FIGURES 1 through 7, discussed below, and the various embodiments used to describe the principles of the present invention in this patent document are by way of illustration only and should not be construed in any way to limit the scope of the present invention. Those skilled in the art will understand that the principles of the present invention may be implemented in any suitably arranged terminal. Preferred embodiments of the present invention will be described herein below with reference to the accompanying drawings. In the following description, well-known functions or constructions are not described in detail since they would obscure the invention in unnecessary detail. And, terms described below, which are defined considering functions in the present invention, can be different depending on user and operator's intention or practice. Therefore, the terms should be defined on the basis of the disclosure throughout this specification.

Exemplary embodiments of the present invention provide a technology for a method for turning pages in an electronic book (e-book) reader to solve a sense of difference between a paper book and an e-book.

FIG. 1 illustrates a perspective diagram for an e-book reader according to an embodiment of the present invention.

Referring to FIG. 1, the e-book reader 10, which is a portable terminal having an e-book function, can include a Personal Digital Assistant (PDA), a mobile phone and the like.

The e-book reader 10 includes a display 11 for outputting a video and a keypad 12 for key input. The mobile phone can further include a speaker 13 for outputting a voice and a microphone 14 for receiving an input of voice. The display 11 can be a Liquid Crystal Display (LCD) having millions of pixels. Further, if a touch screen is applied to the LCD, the display 11 may perform a function of a data input unit accessorily or in place of the keypad 12.

Particularly, the e-book reader 10 according to the present embodiment provides page turning similar with that of a paper book. The e-book reader 10 displays a paper book constituted of left/right pages (or up/down pages) similar with the paper book, on the display 11. The left/right pages of the paper book can display a main publication, a number of a page added, a footnote and the like. If a page turn signal is generated in the keypad 12 or the touch screen, the e-book according to the present embodiment displays the same action as turning pages of the paper book and turns pages. That is, to view a next page, the e-book displays an action of turning a right page to the left as if turning the page of the paper book. Also, to view a previous page, the e-book displays an action of turning a left page to the right as if turning the page of the paper book. Further, the e-book reader 10 can control a speed of turning pages. For instance, the e-book reader 10 displays an action such as slowly or quickly turning pages of a general paper book. Accordingly, the e-book according to the present embodiment can enable looking over, and solve a user's sense of difference by turning pages as if treating the general paper book.

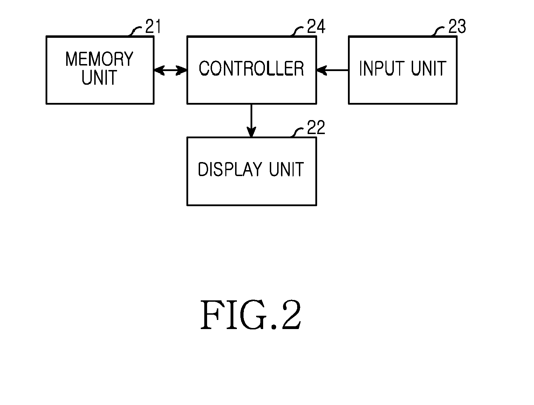

FIG. 2 illustrates a block diagram for a construction of an e-book reader according to an embodiment of the present invention.

Referring to FIG. 2, the e-book reader includes a memory unit 21 for storing target data to be displayed, a display unit 22 for decoding the data stored in the memory unit 21 and outputting an image signal, an input unit 23 for receiving a user input for turning a page of a screen outputted on the display unit 22, and a controller 24 for performing the general control of operation.

The controller 24 controls to display an action such as turning pages of a paper book in a method earlier mentioned in FIG. 1 according to a page turn signal generated in the input unit 23 and turn pages. Also, the controller 24 controls to adjust a speed of turning pages according to a corresponding signal.

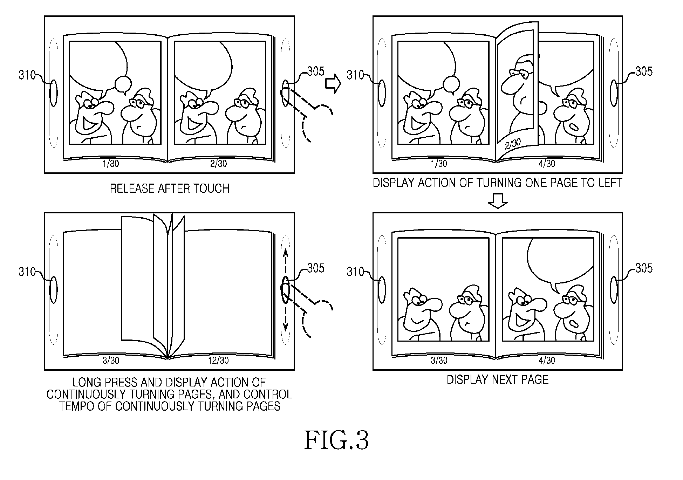

In exemplary embodiments of the present invention discussed with regard to FIGS. 3 to 7 below, a process for turning a right page to the left is illustrated. A process for turning a left page to the right may be implemented similarly to the process for turning the right page to the left, and thus the description thereof is omitted for brevity.

FIG. 3 illustrates a diagram for a method for turning pages in an e-book reader with a touch screen according to an embodiment of the present invention.

Referring to FIG. 3, an e-book displayed as left/right pages is displayed on a touch screen. The e-book reader has page turn buttons 305 and 310 for generating a page turn signal at both ends of the left/right pages on the touch screen. If a user releases after shortly touching, in detail, releases after touching the page turn button 305 of the right page within a predetermined time (i.e. if the duration of the touch, from making contact to release, is shorter than a threshold time period), the e-book displays an action of turning one right page to the left as if turning pages of a paper book and then, displays a next page.

Also, if the user long presses, i.e., maintains a touch on the page turn button 305 of the right page for a threshold time or more, the e-book displays an action of continuously turning right pages to the left at a set tempo. At this time, as the user touches and moves up in a state where the user long presses the page turn button 305 of the right page (i.e. as the user drags the contact point up whilst maintaining contact with the touch screen), the e-book displays an action of more quickly continuously turning pages. In contrast, as the user touches and moves down in the state where the user long presses the page turn button 305 of the right page, the e-book displays an action of more slowly continuously turning pages. After that, if the touch is released, the page turning is stopped and a corresponding page is displayed. That is, in an example where a page turn signal is continuous, the e-book displays an action of continuously turning pages. Also, if the user touches and moves up or down in a state where the page turn signal is continuous, a variable speed signal is generated and, according to this signal, a tempo of continuously turning pages is controlled. At this time, if the touch and move returns to a neutral position, the variable speed signal is stopped, and only the continuous page turn signal is generated, and an action of continuously turning pages at a set reference tempo is displayed by the continuous page turn signal. That is, the variable speed signal follows the page turn signal.

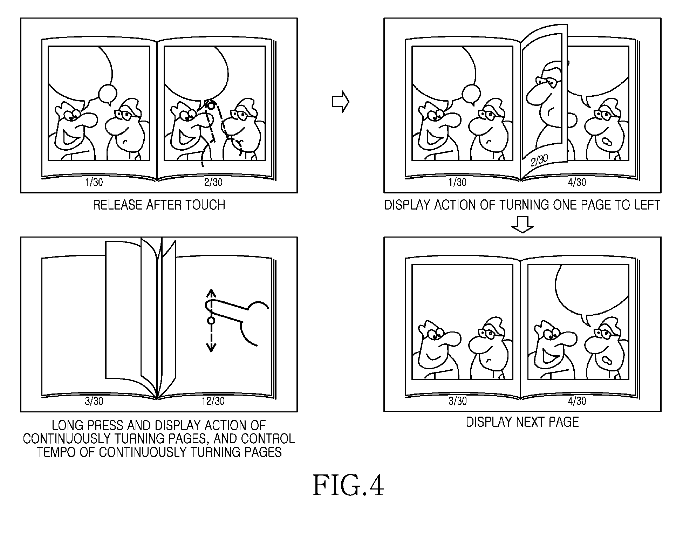

FIG. 4 illustrates a diagram for a method for turning pages in an e-book reader with a touch screen according to an embodiment of the present invention.

Referring to FIG. 4, an e-book displayed as left/right pages is displayed on a touch screen. If a user releases after touching a touch region displaying a right page within a threshold time, the e-book displays an action of turning one right page to the left as if turning pages of a paper book and then, displays a next page.

Also, if the user long presses the touch region displaying the right page, i.e., maintains a touch on the touch region for a threshold time or more, the e-book displays an action of continuously turning right pages to the left at a set tempo. At this time, as the user touches and moves up in a state where the user long presses the touch region (in other words, if the user touches and drags up while maintaining contact with the touch region), the e-book displays an action of more quickly continuously turning pages. In contrast, as the user touches and moves down (drags down) in the state where the user long presses the touch region, the e-book displays an action of more slowly continuously turning pages. After that, if the touch is released, the page turning is stopped and a corresponding page is displayed. That is, in example where a page turn signal is continuous, the e-book displays an action of continuously turning pages. Also, if the user touches and moves up or down in a state where the page turn signal is continuous, a variable speed signal is generated and, according to this signal, a tempo of continuously turning pages can be controlled. At this time, if the touch and move returns to a neutral position, the variable speed signal is stopped, and only the continuous page turn signal is generated, and an action of continuously turning pages at a set reference tempo is displayed by the continuous page turn signal. That is, the variable speed signal follows the page turn signal.

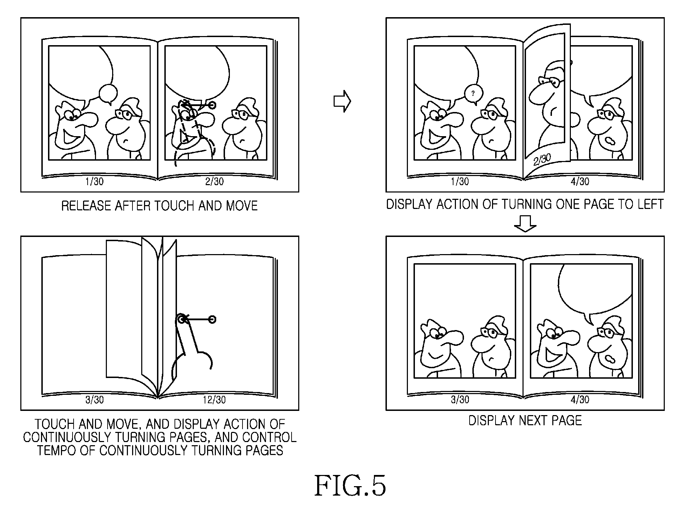

FIG. 5 illustrates a diagram for a method for turning pages in an e-book reader with a touch screen according to an embodiment of the present invention.

Referring to FIG. 5, an e-book displayed as left/right pages is displayed on a touch screen. If a user touches a right page and then, releases after touching and moving left within a threshold time, that is, flicking touches the right page, a page turn signal is generated, and an action of turning one right page to the left as if turning pages of a paper book is displayed by the page turn signal and then, a next page is displayed.

Also, if the user touches a right page and then touches and moves for the threshold time or more, a continuous page turn signal is generated, and an action of continuously turning right pages is displayed by the continuous page turn signal. After that, as the user touches and moves more left after the continuous page turn signal is generated, an action of more quickly continuously turning pages is displayed. In contrast, as the user touches and moves more right after the continuous page turn signal is generated, an action of more slowly continuously turning pages is displayed. After that, if the user releases the touch, a corresponding page is displayed.

That is, in an example where a page turn signal is continuous, the e-book displays an action of continuously turning pages. Also, if the user touches and moves right or left in a state where the page turn signal is continuous, a variable speed signal is generated and, according to this signal, a tempo of continuously turning pages can be controlled. If the touch is released, that is, if the page turn signal is stopped, the page turning is stopped and a corresponding page is displayed. At this time, if the touch and move returns to a neutral position, the variable speed signal is stopped, and only the continuous page turn signal is generated, and an action of continuously turning pages at a set reference tempo is displayed by the continuous page turn signal. That is, the variable speed signal follows the page turn signal.

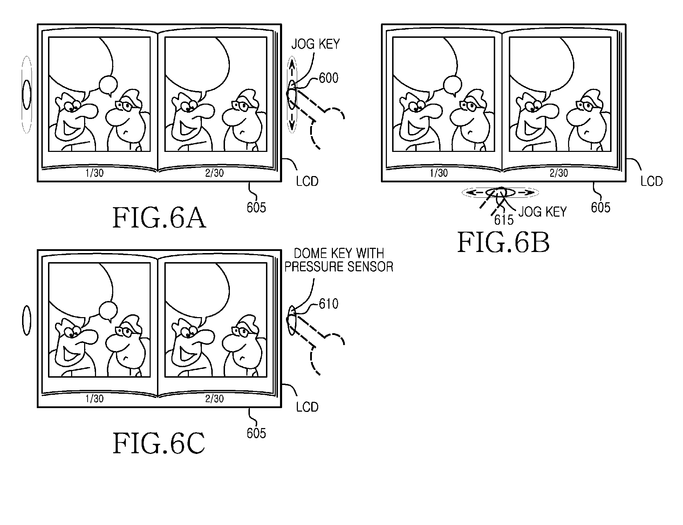

FIGS. 6A to 6C illustrate a diagram for a page turn means in an e-book reader with an LCD according to an embodiment of the present invention.

Referring to FIG. 6A, an e-book displayed as left/right pages is displayed on an LCD 605. An e-book reader provides keys 600 (which in this example are jog keys) playing a role similar to the page turn buttons 305 and 310 earlier mentioned in FIG. 3, around the LCD 605. If a user once presses and releases the jog key 600, a page turn signal is generated and, after an action of turning one page of a paper book is displayed by the page turn signal, a next page is displayed. Also, if the user continuously presses the jog key 600 for a threshold time or more, the continuous page turn signal is generated and, by this signal, an action of continuously turning pages at a set tempo is displayed. If the jog key 600 moves up or down following the continuous page turn signal, the variable speed signal is generated and, according to this signal, a tempo of continuously turning pages can be controlled. At this time, if the jog key 600 again returns to neutrality, the variable speed signal is stopped, and only the continuous page turn signal is generated, and an action of continuously turning pages at a set reference tempo is displayed by the continuous page turn signal. After that, if the jog key 600 is released, that is, if the page turn signal is stopped, the page turning is stopped and a corresponding page is displayed.

Referring to FIG. 6B, an e-book displayed as left/right pages is displayed on an LCD 605. An e-book terminal provides one key 615 (which in this example is a jog key) around the LCD 605. If a user releases within a threshold time after moving the jog key 615 from a neutral position to the right, the page turn signal is generated and, after an action of turning one left page to the right as if turning pages of a paper book is displayed by this page turn signal, a next page is displayed. Also, if the user moves the jog key 615 for the threshold time or more, the continuous page turn signal is generated and an action of continuously turning pages at a set tempo is displayed by this continuous page turn signal. As the jog key 615 moves more right following the continuous page turn signal, the variable speed signal of more quickly turning pages is generated.

Referring to FIG. 6C, an e-book displayed as left/right pages is displayed on an LCD 605. An e-book terminal has keys 610 (which in this example are dome keys) with pressure sensors at the left/right of the LCD 605. If a user releases after pressing the dome key 610 of a right page, in detail, releases after pressurizing the dome key 610 of the right page within a predetermined time, an action of turning one right page to the left as if turning pages of a paper book is displayed and then, a next page is displayed.

Also, if the user long presses, that is, presses the dome key 610 of the right page for a threshold time or more, a continuous page turn signal is generated and, according to this signal, an action of continuously turning right pages to the left at a set tempo is displayed. If the continuous page turn signal is generated, the pressure sensor senses a pressure level forwarded from the dome key 610 and generates the variable speed signal proportional to the sensed pressure level. A tempo of turning pages can be controlled according to the variable speed signal generated in the pressure sensor. After that, if the dome key 610 is released, that is, if the page turn signal is stopped, the page turning is stopped and a corresponding page is displayed.

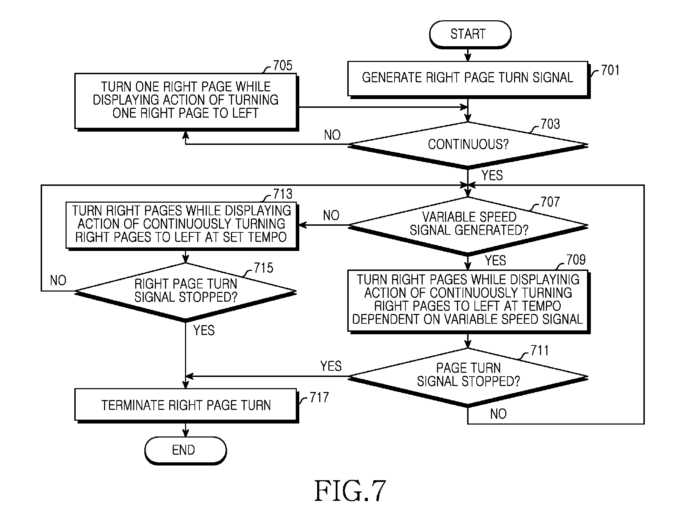

FIG. 7 illustrates a flowchart for a procedure of turning pages in an e-book reader with a touch screen according to an embodiment of the present invention.

Referring to FIG. 7, in step 701, the controller 24 senses that a right page turn signal is generated.

After that, in step 703, the controller 24 identifies if a right page turn signal is a continuous signal. If the controller identifies in step 703 that the sensed right page turn signal is not the continuous signal, the controller 24 proceeds to step 705 and controls to turn one right page to a next page while displaying an action of turning one right page to the left as if turning pages of a paper book.

If the controller identifies in step 703 that the sensed right page turn signal is continuous, the controller 24 proceeds to step 707 and identifies if a variable speed signal is generated. Although described above, a tempo of turning pages is different according to the variable speed signal, and the variable speed signal follows the continuous page turn signal.

If the controller identifies in step 707 that the variable speed signal is not generated, the controller 24 proceeds to step 713 and controls to turn right pages while displaying an action of continuously turning right pages to the left at a set tempo as if turning pages of a paper book. Next, in step 715, the controller 24 identifies if the right page turn signal is stopped. If the controller identifies in step 715 that the right page turn signal is stopped, the controller 24 terminates the page turning and, if the controller identifies in step 715 that the right page turn signal is not stopped, the controller 24 returns to step 707.

However, if the controller identifies in step 707 that the variable speed signal is generated, the controller 24 proceeds to step 709 and controls to turn right pages while displaying an action of continuously turning right pages to the left at a tempo dependent on the variable speed signal as if turning pages of the paper book.

Next, in step 711, the controller 24 identifies if the page turn signal is stopped. If the controller identifies in step 711 that the page turn signal is stopped, the controller 24 performs step 717 and its subsequent processes. If the controller identifies in step 711 that the page turn signal is not stopped, the controller 24 repeats step 707 and its subsequent processes. Although described above, when the continuous page turn signal is generated, the variable speed signal can follow the continuous page turn signal. Accordingly, in course of turning pages while displaying an action of continuously turning pages at a corresponding tempo dependent on the variable speed signal, if a page turn signal is stopped, the page turning is just terminated.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

In conclusion, a method for turning pages in an e-book reader according to certain embodiments of the present invention can solve a sense of difference with a paper book.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for turning pages in an electronic book (e-book) reader [10], the method comprising:
displaying an e-book including left and right pages; and
responsive to detecting a page turn signal, turning [705, 707, 713] one of a left page and
a right page while displaying an action of one of turning the left page to a right and the right page to a left as if turning pages of a paper book.

2. The method of claim 1 further comprising:
responsive to the page turn signal being continuous, turning [709, 713] pages while displaying an action of continuously turning pages.

3. The method of claim 2 further comprising:
responsive to the page turn signal not being continuous, turning [705] one page while displaying an action of turning one page.

4. The method of claim 2 further comprising:
responsive to the page turn signal being continuous and a variable speed signal being generated, [709] turning pages while displaying an action of continuously turning pages at a tempo dependent on the variable speed signal; and
responsive to the page turn signal being continuous and the variable speed signal not being generated, [713] turning pages while displaying an action of continuously turning pages at a set reference tempo.

5. The method of claim 2 further comprising:
responsive to the page turn signal being stopped, terminating [717] the page turning.

6. The method of claim 3 further comprising:
responsive to the page turn signal being stopped, terminating [717] the page turning.

7. The method of claim 4, wherein the e-book reader displays the e-book on a touch screen [11], the method further comprising:
enabling an up/down touch and move at both sides of the left and right pages, using touch buttons [305, 310], wherein a touch button [310] of the left page is used for turning the left page to the right, and a touch button [305] of the right page is used for turning the right page to the left;
responsive to detecting the touch button being touched and released, generating [701] the page turn signal;
responsive to detecting the touch button for a threshold time, generating [703] the continuous page turn signal; and
responsive to detecting a drag in a first direction following the continuous page turn signal, generating [707] a variable speed signal for increasing a rate at which pages are turned; and
responsive to detecting a drag in a second direction following the continuous page turn signal, generating [707] a variable speed signal for decreasing a rate at which pages are turned.

8. The method of claim 4, wherein the e-book reader displays the e-book on a touch screen [11], the method further comprising:
responsive to detecting a touch region displaying the right page being released after touched, generating [701] a page turn signal for turning the right page to the left;
responsive to detecting a touch region displaying the left page being released after touched, generating [701] a page turn signal for turning the left page to the right;
responsive to detecting the touch region displaying the right page being touched for a threshold time, generating [703] a page turn signal for continuously turning right pages to the left;
responsive to detecting the touch region displaying the left page being touched for the threshold time, generating [703] a continuous page turn signal for continuously turning left pages to the right;
responsive to detecting a drag in a first direction following the continuous page turn signal, generating [707] a variable speed signal for increasing a rate at which pages are turned; and
responsive to detecting a drag in a second direction, generating [707] a variable speed signal for decreasing a rate at which pages are turned.

9. The method of claim 4, wherein the e-book reader displays the e-book on a touch screen [11], the method further comprising:
responsive to detecting a touch in a touch region displaying the right page, a release after the touch, and a drag left within a threshold time, generating [701] a page turn signal for turning one right page to the left;
responsive to detecting a touch in a touch region displaying the left page, and a release after the touch, and a drag right within the threshold time, generating [701] a page turn signal for turning one left page to the right;
responsive to detecting a touch and drag within the threshold time after the touch in the touch region displaying the right page, generating [703] a continuous page turn signal for continuously turning right pages to the left;
responsive to detecting a touch and drag within the threshold time after the touch in the touch region displaying the left page, generating [703] a continuous page turn signal for continuously turning left pages to the right;
responsive to detecting a drag left following generation of the continuous page turn signal for continuously turning the right pages to the left, generating [707] a variable speed signal for increasing a rate at which pages are turned; and
responsive to detecting a drag right following the continuous page turn signal for continuously turning left pages to the right, generating [707] a variable speed signal for increasing a rate at which pages are turned.

10. The method of claim 4, wherein the e-book reader displays the e-book on a Liquid Crystal Display (LCD) [11], and comprises a left and right jog keys [600] at the left and right of the LCD,
wherein the left jog key is used for turning the left page to the right, and the right jog key is used for turning the right page to the left,
the method further comprising:
responsive to detecting one of the left and right jog keys being released after pressed, generating the page turn signal;
responsive to detecting one of the left and right jog keys being pressed for a threshold time, generating the continuous page turn signal; and
responsive to detecting one of the left and right jog keys moving in a first direction following the continuous page turn signal, generating a variable speed signal for increasing a rate at which pages are turned; and
responsive to detecting one of the left and right jog keys moving in a second direction, generating a variable speed signal for decreasing a rate at which pages are turned.

11. The method of claim 4, wherein the e-book reader displays the e-book on a Liquid Crystal Display (LCD) [11], and comprises a left/right movable jog key associated with the LCD [615],
responsive to detecting the jog key being released within a threshold time after moving left, generating [701] a page turn signal for turning the left page to the right; responsive to detecting the jog key being released within the threshold time after moving right, generating [701] a page turn signal for turning the right page to the left; responsive to detecting the jog key moving to one of the left and right for the threshold time, generating [703] a continuous page turn signal for continuously turning pages; and responsive to detecting movement of the jog key to one of the left and right increasing following generation of the continuous page turn signal, generating [703] a variable speed signal for increasing a rate at which pages are turned.

12. The method of claim 4, wherein the e-book reader displays the e-book on a Liquid Crystal Display (LCD) [11], and comprises a left and right dome keys including a pressure sensor [610],
wherein the left dome key is used for turning the left page to the right, and the right dome key is used for turning the right page to the left,
the method further comprising:
responsive to detecting the dome key being released within a threshold time after being pressed, generating [701] a page turn signal for turning one page;
responsive to detecting the dome key being pressed for the threshold time, generating [703] a continuous page turn signal for continuously turning pages; and
wherein the pressure sensor senses a pressure level following the continuous page turn signal and generates the variable speed signal proportional to the pressure level.

13. An apparatus for turning pages in an electronic book (e-book) reader [10], the apparatus comprising:
an output unit [22] configured to display an e-book as left and right pages; and
a control unit [24] configured to turning one of a left page and a right page in response to a page turn signal being generated while the output unit is further configured to display an action of turning one of the left page to a right and a right page to the left as if turning pages of a paper book.

14. The apparatus of claim 13, wherein the control unit is further configured to turn pages in response to the page turn signal being continuous while the output unit is further configured to display an action of continuously turning pages;
wherein the control unit is further configured to turn one page, in response to the generated page turn signal not being continuous, while the output unit is further configured to display an action of turning one page.

15. The apparatus of claim 14, wherein the control unit is further configured to turn, responsive to the page turn signal being continuous and a variable speed signal being generated, pages while the output unit is further configured to display an action of continuously turning pages at a tempo dependent on the variable speed signal; and wherein the control unit is further configured to turn, responsive to the page turn signal being continuous and the variable speed signal not following, pages while the output unit is further configured to display an action of continuously turning pages at a set reference tempo.
